# FASCICULE DE BREVET EUROPEEN

(11) **EP 1 439 341 B1**
(45) Date de publication et mention de la délivrance du brevet: **02.12.2009**
(21) Numéro de dépôt: 04290034.0
(22) Date de dépôt: 07.01.2004
(51) Int. Cl.: F16K 17/04

(54) **Machine comprenant une vanne de sécurité pour l'alimentation en fluide sous pression**
Werkzeug mit einem Sicherheitsventil für Druckfluid
Machine comprising a safety valve for the circulation of pressurised fluid

(30) Priorité: 14.01.2003 FR 0300363
(43) Date de publication de la demande: 21.07.2004
(73) Titulaire: Cooper Power Tools SAS, 77330 Ozoir la Ferrière (FR)
(72) Inventeur: Fouillet, Jean-Pierre, 94500 Champigny (FR); Pereira Santo, Sébastien, 94130 Nogent Sur Marne (FR)
(74) Mandataire: Domenego, Bertrand

(56) Documents cités:
- DE-B- 1 047 561
- DE-C- 268 228
- GB-A- 2 191 270
- GB-A- 2 366 830
- US-A- 4 650 377
- US-A- 4 700 742
- US-A- 5 876 041

## Description

La présente invention concerne une machine selon le préambule de la revendication 1.

L'invention s'applique notamment à l'alimentation de machines d'usinage, par exemple les machines portatives de perçage à moteurs pneumatiques.

Une telle machine est raccordée à une source d'air comprimé, par exemple via un tuyau, et comporte généralement une broche rotative portant un outil de perçage.

Si une baisse de pression se produit en amont de la machine lorsqu'elle fonctionne, par exemple suite à la formation d'un pli dans le tuyau, le moteur pneumatique n'entraîne plus l'outil de perçage.

Lors d'une remontée ultérieure en pression, par exemple lorsque le tuyau est déplié, l'outil peut être, sur certaines machines, réentraîné intempestivement par le moteur.

On conçoit que cela induit des risques de blessure d'un opérateur utilisant la machine de perçage.

On connaît par ailleurs des électrovannes de sécurité équipant des circuits d'alimentation en air comprimé. Une telle électrovanne est commandée en fonction de signaux fournis par un capteur de pression extérieur à la vanne pour déclencher sa fermeture lorsque la pression diminue en dessous d'une valeurseuil prédéterminée.

De telles électrovannes, par example connues du document US 4700742 conduisent à des structures relativement complexes et coûteuses et mal adaptées à des machines portatives.

Un but de l'invention est de résoudre ces problèmes en fournissant une machine qui permette de limiter les risques de blessure suite à une baisse momentanée de la pression du fluide, et qui soit d'une structure simple et de coût réduit.

A cet effet, l'invention a pour objet une machine selon la revendication 1.

Selon des modes particuliers de réalisation, la machine peut comprendre l'une ou plusieurs des caractéristiques des revendications dépendantes.

L'invention sera mieux comprise à la lecture de la description qui va suivre, donnée uniquement à titre d'exemple, et faite en se référant aux dessins annexés, sur lesquels :
- la figure 1 est une vue schématique en perspective d'une machine d'usinage selon l'invention,
- la figure 2 est une vue schématique en coupe longitudinale de la vanne de sécurité de la machine de la figure 1, l'obturateur de la vanne étant en position fermée, et
- la figure 3 est une vue analogue à la figure 2, l'obturateur étant en position ouverte.

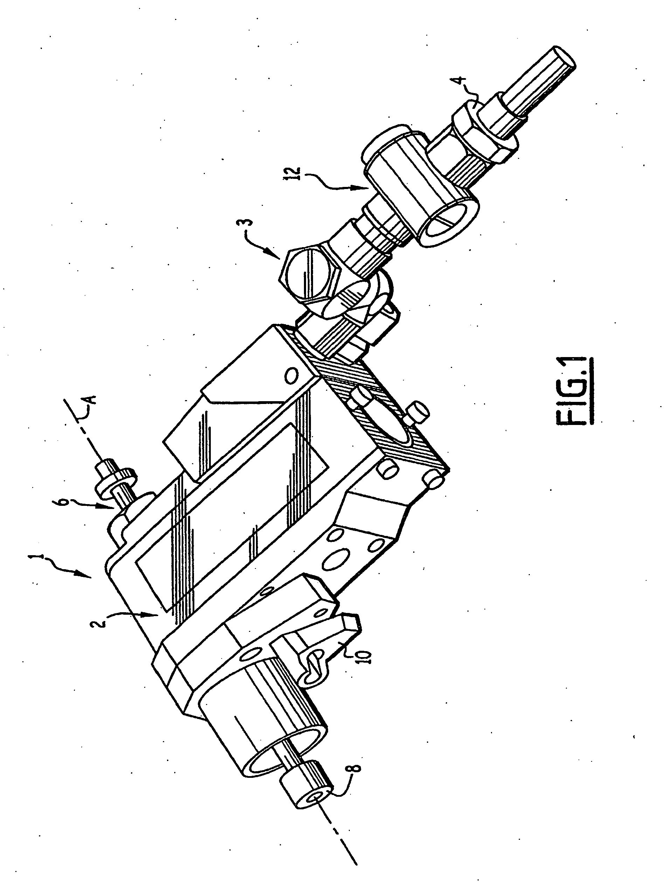

La figure 1 illustre une machine pneumatique portative de perçage 1 qui comprend classiquement :
- un carter 2 enfermant un moteur pneumatique,
- un circuit 3 d'alimentation du moteur pneumatique en air comprimé, le circuit 3 comprenant un raccord 4 destiné à être relié par exemple via un tuyau à une source d'air comprimé non-représentée,
- une broche 6 porte-outils, et
- un mécanisme non-représenté d'entraînement de la broche 6.

De manière classique, des outils de perçage peuvent être montés de manière amovible à l'extrémité avant 8 de la broche.

Le mécanisme d'entraînement est un mécanisme permettant de transformer le mouvement de l'arbre de sortie du moteur pneumatique en des mouvements de translation de la broche 6 le long de son axe A et en des mouvements de rotation autour de cet axe A. Il peut s'agir par exemple d'un mécanisme classique généralement dénommé en français « mécanisme d'avance mécanique » et en anglais « positive feed drill ».

Un tel mécanisme est décrit par exemple dans le document US-5 351 797.

La machine 1 comprend une gâchette 10 d'actionnement du fonctionnement du moteur pneumatique.

Le circuit d'alimentation 3 comprend en aval du raccord 4 une vanne de sécurité 12.

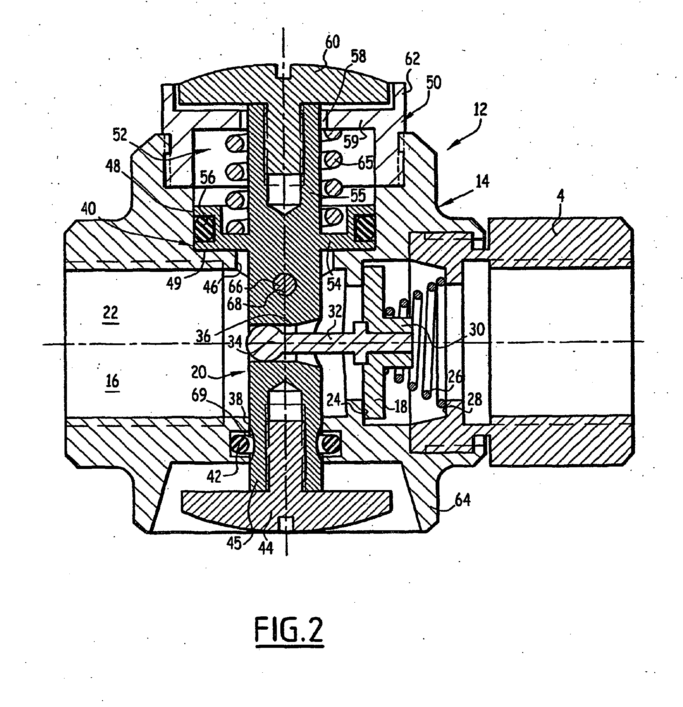

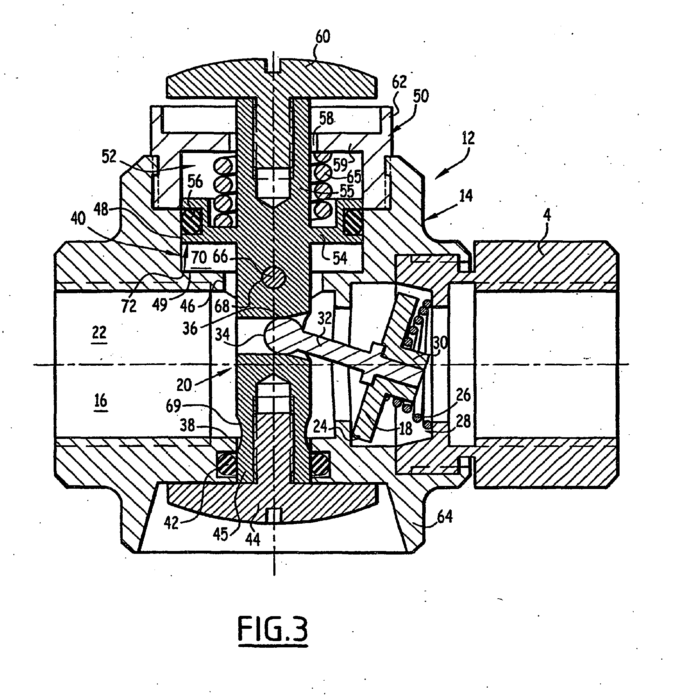

Comme illustré plus particulièrement par les figures 2 et 3, la vanne 12 comprend principalement :
- un corps 14 traversé par un passage longitudinal 16,
- un obturateur 18, et
- un tiroir transversal 20 de déplacement de l'obturateur 18.

Le raccord 4 est reçu dans l'extrémité amont du passage 16 et est fixé au corps 14, par exemple par vissage. Le raccord 4 est creux et communique avec le passage 16 pour former un canal 22 de circulation de l'air comprimé.

L'extrémité aval du passage 16 est taraudée pour permettre la fixation de la vanne 12 au reste de la machine 1 et assurer la mise en communication du canal 22 avec le reste du circuit d'alimentation 3.

Le corps 14 comprend un épaulement annulaire 24 qui forme à l'intérieur du canal 22 un siège pour l'obturateur 18.

L'obturateur 18 a, par exemple, sensiblement une forme de disque. Il est basculant par rapport au siège 24 entre une première position fermée illustrée par la figure 2, et une seconde position ouverte illustrée par la figure 3.

Dans la position fermée de la figure 2, l'obturateur 18 est en appui contre le siège 24 et obture le canal 22 de sorte que l'alimentation du moteur pneumatique en air comprimé est empêchée.

Dans la position ouverte de la figure 3, l'obturateur 18 a basculé dans le sens horaire sur la figure 3 par rapport à son bord inférieur en écartant ainsi son bord supérieur du siège 24. Le canal 22 n'est donc plus obturé et l'air comprimé peut alors le traverser pour alimenter le moteur pneumatique de la machine 1.

La vanne 12 comprend en outre un ressort 26 de rappel de l'obturateur 18 vers sa position fermée. Ce ressort 26 prend appui en amont sur un épaulement annulaire 28 prévu à l'intérieur du raccord 4, et en aval sur l'obturateur 18 autour d'un téton 30 amont.

L'obturateur 18 est prolongé vers l'aval, c'est-à-dire vers la gauche sur les figures 2 et 3, par une tige 32 de liaison au tiroir 20. Cette tige 32 est terminée par une rotule 34 reçue dans un orifice 36 ménagé dans un tronçon intermédiaire du tiroir 20. On notera que l'orifice 36 est évasé à son extrémité amont.

Le tiroir 20 a une forme de tige et traverse le corps 14 au moyen de deux orifices, à savoir un orifice 38 inférieur sur les figures 2 et 3 et un orifice 40 supérieur sur ces mêmes figures.

Un joint torique d'étanchéité 42 est disposé dans l'orifice inférieur 38, entre le corps 14 et le tiroir 20.

Un bouton de commande 44, disposé à l'extérieur du corps 14 et accessible depuis l'extérieur de la vanne 12, est vissé dans l'extrémité inférieure 45 du tiroir 20.

Ce bouton 44 est de couleur verte pour signaler qu'il commande l'alimentation de la machine 1 en air comprimé comme cela sera décrit par la suite.

L'orifice supérieur 40 est un orifice étagé qui comprend un tronçon inférieur 46 étroit entourant à faible distance le tiroir 20 et un tronçon supérieur 48 plus large. Un épaulement annulaire 49 relie les tronçons 46 et 48.

La vanne 12 comprend en outre un capuchon 50 vissé sur le corps 14 pour délimiter avec le tronçon supérieur 48 de l'orifice 40 un cylindre 52 recevant un piston 54 venu de matière avec l'extrémité supérieure 55 du tiroir 20. Un joint torique d'étanchéité 56 est disposé entre le piston 54 et la paroi du tronçon supérieur 48 de l'orifice 40.

L'extrémité supérieure 55 du tiroir 20 traverse un orifice 58 prévu dans le fond 59 du capuchon 50. L'orifice 58 entoure à faible distance l'extrémité 55.

Un bouton de commande 60 accessible depuis l'extérieur de la vanne 12 est vissé sur l'extrémité supérieure 55 du tiroir 20. Ce bouton 60 est de couleur rouge pour signaler qu'il commande l'interruption de l'alimentation de la machine 1, comme cela sera décrit par la suite.

On notera que le bouton 60 est entouré d'un rebord annulaire 62 prévu sur le capuchon 50.

Un rebord 64 venu de matière avec le corps 14 entoure le bouton inférieur 44 pour éviter les manipulations intempestives du bouton 44.

Un ressort 65 est disposé dans le cylindre 52 autour de l'extrémité 55 du tiroir 20. Le ressort 65 prend appui sur le fond 59 du capuchon 50 et sur le piston 54.

Une tige transversale 66 est reçue dans un orifice 68 ménagé dans le tronçon intermédiaire du tiroir 20, au-dessus de l'orifice 36. Cette tige 66 s'étend latéralement par rapport au tiroir 20 pour être reçue dans une fente verticale de guidage (non-représentée) ménagée dans une paroi latérale du corps 14. La tige 66 participe au guidage du tiroir 20 lors de ses déplacements qui vont maintenant être décrits.

Le tiroir 20 est mobile en translation par rapport au corps 14 entre deux positions extrêmes ou de fin de course, à savoir une première position inférieure de repos illustrée par la figure 2 et une seconde position supérieure active illustrée par la figure 3.

Dans là position de repos de la figure 2, le piston 54 est en appui contre l'épaulement 49 de l'orifice 40. La chambre délimitée sous le piston 54 dans le cylindre 52 est donc de volume sensiblement nul.

L'obturateur 18 est alors en position fermée. La position de repos du tiroir 20 est donc une position d'interruption de l'alimentation en air comprimé.

On notera que l'air comprimé situé en amont de l'obturateur 18 agit sur ce dernier pour le plaquer contre le siège 24 et le maintient ainsi dans sa position fermée, quelle que soit la pression de l'air comprimé, de sorte que la position de repos du tiroir 20 est une position stable. Le bouton inférieur 44 est alors en position extraite et le bouton supérieur 60 en position enfoncée.

Un évidement 69 ménagé dans l'extrémité inférieure 45 du tiroir 20 forme alors un évent permettant la mise à l'air du canal 22 en aval de l'obturateur 18.

Dans la position active illustrée par la figure 3, le tiroir 20 a été manuellement déplacé vers le haut par rapport à sa position de repos de la figure 2. Le tiroir 20 a entraîné avec lui la rotule 34 provoquant ainsi le basculement de l'obturateur 18 dans sa position ouverte contre l'action du ressort 26. La position active du tiroir 20 est donc une position d'alimentation en air comprimé. Le joint 42 assure l'étanchéité entre l'extrémité inférieure 45 du tiroir 20 et le corps 14.

Le piston 54 s'est alors déplacé vers le haut dans le cylindre 52 en augmentant le volume de la chambre 70 située dans le cylindre 52 sous le piston 54. Cette chambre 70 communique, via le tronçon inférieur 46 de l'orifice 40, avec le canal 22 de sorte que l'air comprimé de la source est en contact avec toute la surface de la paroi inférieure 72 du tiroir 54.

Le ressort 65 a été comprimé entre le piston 54 et le fond 59 du capuchon 50 et tend ainsi à repousser le tiroir 20 vers sa position de repos.

Le ressort 65 est taré pour équilibrer la force exercée sur le piston 54 par de l'air présent dans la chambre 70 et ayant une pression égale à une valeur seuil prédéterminée.

Ainsi, lorsque le tiroir 20 est en position d'alimentation comme sur la figure 3; et si la pression de l'air comprimé dans le canal 22 passe sous la valeur seuil, le ressort 65 entraîne le tiroir 20 via le piston 54 vers sa position d'interruption de l'alimentation. Le tiroir 20 déplace alors l'obturateur 18 vers sa position fermée. Le tiroir 20 et l'obturateur 18 reviennent ainsi dans leurs positions illustrées par la figure 2. On notera que le ressort 26 n'est pas assez puissant pour ramener à lui seul l'obturateur 18 dans sa position fermée.

Si une remontée en pression intempestive intervient ensuite, l'air sous pression en amont de l'obturateur 18 le maintient dans sa position fermée et le moteur pneumatique n'est pas alimenté en air comprimé.

Ainsi, une reprise intempestive de l'entraînement de la broche 6 n'est pas possible.

Pour pouvoir utiliser à nouveau la machine 1, il faut pousser le bouton 44 vers le haut pour amener le tiroir 20 vers sa position d'alimentation et donc l'obturateur 18 vers sa position ouverte. Si la pression de l'air comprimé est suffisante, cette position du tiroir 20 est une position stable. En effet, la force exercée par l'air comprimé sur le piston 54 est alors supérieure à la force de rappel exercée par le ressort 65.

Si l'on souhaite interrompre l'alimentation de la machine 1 lors de son fonctionnement, on peut appuyer sur le bouton 60 pour amener l'ensemble tiroir 20/obturateur 18 dans sa position de la figure 2.

Ainsi, la vanne 12 provoque automatiquement l'interruption de l'alimentation en cas de diminution de la pression de l'air d'alimentation sous une valeur seuil et impose une action volontaire de l'opérateur pour rétablir l'alimentation.

Dans une variante non-représentée, la vanne 12 peut comprendre des moyens de réglage de la force de rappel du ressort 65 pour modifier la valeur seuil de pression. De tels moyens de réglage comprennent par exemple une vis.

Les risques de blessure d'un opérateur par une remise en fonctionnement intempestive de la machine 1 sont donc réduits.

En outre, la vanne 12 a une structure simple, un encombrement et un coût réduits, notamment car elle ne fait pas intervenir de moyens électriques pour commander le déplacement de l'obturateur 18 et car les moyens de déplacement de l'obturateur 18 formés par le tiroir 20, le piston 54 et le ressort 65 sont intégrés à la vanne et plus précisément logés dans son corps 14.

On notera également que la vanne 12 peut être intégrée très facilement à des machines 1 existant déjà.

Plus généralement, une vanne telle que décrite ci-dessus peut être utilisée pour équiper des machines d'usinage autres que des machines de perçage, mais également équiper des machines consommatrices de fluide sous pression autres que des machines d'usinage.

Elle est particulièrement adaptée à l'équipement de machines portatives, c'est-à-dire de masse inférieure à 15 kg.

Ici, le terme machine s'étend par exemple à des systèmes comprenant un ou plusieurs vérins.

## Revendications

1. Machine (1) comprenant un circuit (3) d'alimentation en fluide sous pression et des moyens consommateurs de fluide sous pression, le circuit (3) comprenant une vanne de sécurité (12) comprenant un corps (14) et un obturateur (18) mobile dans le corps, la vanne comprenant des moyens (20, 54, 65) de déplacement de l'obturateur pour le déplacer vers sa position fermée lorsque la pression du fluide alimentant la machine est inférieure à une valeur seuil, les moyens de déplacement comprenant :
- un piston (54) d'entraînement de l'obturateur (18) vers sa position ouverte, le piston étant au contact du fluide sous pression alimentant la machine lorsque l'obturateur est en position ouverte, et
- des moyens (65) de rappel de l'obturateur (18) vers sa position fermée,
**caractérisé en ce que** la vanne de sécurité (12) est disposée en amont des moyens consommateurs de fluide sous pression, et **en ce que** le piston (54) d'entraînement de l'obturateur (18) est, lorsque l'obturateur (18) est en position ouverte, au contact du fluide sous pression en amont des moyens consommateurs.

2. Machine selon la revendication 1, dans laquelle les moyens (65) de rappel sont adaptés pour engendrer une force de rappel équilibrant la force exercée sur le piston (54) par le fluide lorsque sa pression est égale à la valeur seuil.

3. Machine selon la revendication 1 ou 2, dans laquelle les moyens de rappel comprennent un ressort (65) de poussée du piston (54) à l'encontre de l'action du fluide sous pression sur le piston (54).

4. Machine selon l'une des revendications précédentes, dans laquelle la vanne comprend un organe de commande (44) accessible depuis l'extérieur de la vanne (12) pour commander le déplacement de l'obturateur (18) vers sa position ouverte.

5. Machine selon l'une des revendications précédentes, dans laquelle la vanne comprend un organe de commande (60) accessible depuis l'extérieur de la vanne (12) pour commander le déplacement de l'obturateur (18) vers sa position fermée.

6. Machine selon l'une des revendications précédentes, dans laquelle les moyens de déplacement comprennent un tiroir (20) qui porte le piston (54) et auquel l'obturateur (18) est relié.

7. Machine selon la revendication 4 ou 5 prise en combinaison avec la revendication 6, dans laquelle le ou chaque organe de commande (44, 60) est porté par une extrémité (45, 55) du tiroir (20).

8. Machine selon la revendication 7 prise en combinaison avec les revendications 4 et 5, dans laquelle chacun des organes de commande (44, 60) est porté par une extrémité respective (45 ,55) du tiroir (20).

9. Machine selon l'une quelconque des revendications 6 à 8, dans laquelle les moyens (20, 54, 65) de déplacement de l'obturateur (18) sont disposés dans le corps (14).

10. Machine selon l'une quelconque des revendications 6 à 9, dans laquelle l'obturateur (18) est prolongé par une tige (32) de liaison au tiroir (20).

11. Machine selon la revendication 10, dans laquelle la tige de liaison (32) est terminée par une rotule (34) reçue dans un orifice (36) ménagé dans le tiroir (20).

12. Machine selon l'une quelconque des revendications précédentes, dans laquelle le corps (14) comprend un siège (24) pour l'obturateur (18), l'obturateur (18) étant basculant par rapport au siège (24) entre les positions ouverte et fermée.

13. Machine selon l'une des revendications précédentes, la machine constituant une machine d'usinage.

## Claims

1. Machine (1) comprising a circuit (3) for supplying fluid under pressure and consumer means of the fluid under pressure, the circuit (3) comprising a safety valve (12) comprising a body (14) and a shutter (18) which is moveable in the body, the valve comprising means (20, 54, 65) for displacing the shutter in order to displace it towards its closed position when the pressure of the fluid supplying the machine is less than a threshold value, the displacement means comprising:
- a piston (54) for driving the shutter (18) towards its open position, the piston being in contact with the fluid under pressure supplying the machine when the shutter is in an open position, and
- means (65) for returning the shutter (18) towards its closed position,
**characterised in that** the safety valve (12) is disposed upstream of the consumer means of the fluid under pressure, and **in that** the piston (54) for driving the shutter (18) is, when the shutter (18) is in an open position, in contact with the fluid under pressure upstream of the consumer means.

2. Machine according to claim 1, in which the return means (65) are adapted in order to cause a return force which balances the force exerted on the piston (54) by the fluid when its pressure is equal to the threshold value.

3. Machine according to claim 1 or 2, in which the return means comprise a spring (65) for pushing the piston (54) in opposition to the action of the fluid under pressure on the piston (54).

4. Machine according to one of the preceding claims, in which the valve comprises a control element (44) which is accessible from the exterior of the valve (12) in order to actuate the displacement of the shutter (18) towards its open position.

5. Machine according to one of the preceding claims, in which the valve comprises a control element (60) which is accessible from the exterior of the valve (12) in order to actuate the displacement of the shutter (18) towards its closed position.

6. Machine according to one of the preceding claims, in which the displacement means comprise a slide (20) which carries the piston (54) and to which the shutter (18) is connected.

7. Machine according to claim 4 or 5, taken in combination with claim 6, in which the or each control element (44, 60) is carried by one end (45, 55) of the slide (20).

8. Machine according to claim 7, taken in combination with claims 4 and 5, in which each of the control elements (44, 60) is carried by one respective end (45, 55) of the slide (20).

9. Machine according to any of the claims 6 to 8, in which the means (20, 54, 65) for displacing the shutter (18) are disposed in the body (14).

10. Machine according to any of the claims 6 to 9, in which the shutter (18) is extended by a rod (32) for connection to the slide (20).

11. Machine according to claim 10, in which the connection rod (32) is terminated by a pivot pin (34) which is received in an orifice (36) provided in the slide (20).

12. Machine according to any of the preceding claims, in which the body (14) comprises a seat (24) for the shutter (18), the shutter (18) swinging, relative to the seat (24), between the open and closed positions.

13. Machine according to one of the preceding claims, the machine constituting a machine for machining.

## Patentansprüche

1. Maschine (1), umfassend eine Druckfluid-Versorgungseinheit (3) und druckfluidverbrauchende Mittel, wobei die Einheit (3) ein Sicherheitsventil (12) mit einem Körper (14) und ein im Körper bewegliches Absperrorgan (18) umfasst, das Ventil Mittel (20,54,65) zur Bewegung des Absperrorgans aufweist, um es in seine geschlossene Position zu bewegen, wenn der Druck der Fluids, mit dem die Maschine versorgt wird, kleiner ist als ein Schwellenwert, wobei die Bewegungsmittel umfassen:
- einen Kolben (54) zum Antrieb des Absperrorgans (18) in seine geöffnete Position, wobei der Kolben mit dem die Maschine versorgenden Druckfluid in Kontakt ist, wenn das Absperrorgan in der geöffneten Position ist, und
- Mittel (65) zur Rückstellung des Absperrorgans (18) in seine geschlossene Position,
**dadurch gekennzeichnet, dass** das Sicherheitsventil (12) vor den druckfluidverbrauchenden Mitteln angeordnet ist, und dass der Kolben (54) zum Antrieb des Absperrorgans (18) vor den verbrauchenden Mitteln mit dem Druckfluid in Kontakt ist, wenn das Absperrorgan (18) in der geöffneten Position ist.

2. Maschine nach Anspruch 1, wobei die Rückstellmittel (65) geeignet sind, eine Rückstellkraft zu erzeugen, die die vom Fluid auf den Kolben (54) ausgeübte Kraft ausgleicht, wenn sein Druck dem Schwellenwert entspricht.

3. Maschine nach Anspruch 1 oder 2, wobei die Rückstellmittel eine Andruckfeder (65) des Kolbens (54) gegen die Wirkung des Druckfluids auf den Kolben (54) aufweisen.

4. Maschine nach einem der vorherigen Ansprüche, wobei das Ventil ein Steuerorgan (44) aufweist, das vom Äußeren des Ventils (12) aus zugänglich ist, um die Bewegung des Absperrorgans (18) zu seiner geöffneten Position hin zu steuern.

5. Maschine nach einem der vorherigen Ansprüche, wobei das Ventil ein Steuerorgan (60) aufweist, das vom Äußeren des Ventils (12) aus zugänglich ist, um die Bewegung des Absperrorgans (18) zu seiner geschlossenen Position hin zu steuern.

6. Maschine nach einem der vorherigen Ansprüche, wobei die Bewegungsmittel einen Schieber (20) aufweisen, der den Kolben (54) trägt und mit welchem das Absperrorgan (18) verbunden ist.

7. Maschine nach Anspruch 4 oder 5 in Verbindung mit Anspruch 6, wobei das oder jedes Steuerorgan (44,60) von einem Ende (44,55) des Schiebers (20) getragen wird.

8. Maschine nach Anspruch 7 in Verbindung mit den Ansprüchen 4 und 5, wobei jedes der Steuerorgane (44, 60) von einem jeweiligen Ende (44,55) des Schiebers (20) getragen wird.

9. Maschine nach einem der Ansprüche 6 bis 8, wobei die Mittel (20,54,65) zur Bewegung des Absperrorgans (18) im Körper (14) angeordnet sind.

10. Maschine nach einem der Ansprüche 6 bis 9, wobei das Absperrorgan (18) durch eine Stange (32) zur Verbindung mit dem Schieber (20) verlängert wird.

11. Maschine nach Anspruch 10, wobei die Verbindungsstange (32) durch ein Kugelgelenk (34) abgeschlossen wird, das in einer im Schieber (20) ausgesparten Öffnung (36) aufgenommen wird.

12. Maschine nach einem der vorherigen Ansprüche, wobei der Körper (14) einen Sitz (24) für das Absperrorgan (18) aufweist, wobei das Absperrorgan (18) relativ zum Sitz (24) zwischen der geschlossenen und geöffneten Positionen schwenkbar ist.

13. Maschine nach einem der vorherigen Ansprüche, wobei die Maschine eine Bearbeitungsmaschine ist.
